Europäisches Patentamt

European Patent Office

Office européen des brevets

(19)

(11) Publication number: **0 094 698**
**B1**

(12) **EUROPEAN PATENT SPECIFICATION**

(45) Date of publication of patent specification: **16.10.85**

(51) Int. Cl.⁴: **F 16 L 1/04**

(21) Application number: **83200499.8**

(22) Date of filing: **08.04.83**

(54) An articulated pipe discharge ramp and a method for laying a pipeline.

(30) Priority: **19.05.82 US 379594**

(43) Date of publication of application:
**23.11.83 Bulletin 83/47**

(45) Publication of the grant of the patent:
**16.10.85 Bulletin 85/42**

(84) Designated Contracting States:
**FR GB IT NL**

(56) References cited:
**DE-A- 736 447**
**DE-A-2 831 732**
**GB-A-1 479 905**
**GB-A-1 582 116**
**GB-A-2 019 976**
**US-A-4 236 738**

(73) Proprietor: **SHELL INTERNATIONALE
RESEARCH MAATSCHAPPIJ B.V.**
**Carel van Bylandtlaan 30**
**NL-2596 HR Den Haag (NL)**

(72) Inventor: **Langner, Carl Gottlieb**
**6702 Spring Leaf Drive**
**Spring Texas 77379 (US)**

(74) Representative: **Aalbers, Onno et al**
**P.O. Box 302**
**NL-2501 CH The Hague (NL)**

EP 0 094 698 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an articulated pipe discharge ramp attachable to a pipelaying vessel for guiding a pipeline being laid from said vessel, and to a method for laying a pipeline from a pipelaying vessel.

Along with the increasing development of oil and gas wells offshore, demand for pipelaying apparatus to connect underwater facilities or to bring oil and gas to shore has increased sharply. Special purpose pipelaying vessels are employed to lay pipelines along the ocean floor. A typical pipelaying operation involves assembling the pipeline by adding one section of pipe at a time on the pipelaying vessel and then moving the vessel ahead as the assembled pipeline is paid out and laid onto the ocean floor. Alternatively, the pipeline may be preassembled and wound onto a rotatable reel which has been mounted on the vessel. The pipeline then is spooled off the reel and laid onto the sea floor after the vessel arrives at the proper field location.

Any pipeline is capable of withstanding some bending but such bending must stay within predetermined limits to avoid buckling due to excessive bending or metal fatiguing due to cyclic bending. As the pipeline is laid from a conventional pipelaying vessel, the pipeline exits the vessel and follows a more or less "S" shaped configuration from the vessel deck to the ocean floor. In relatively shallow waters, the small vertical descent of the unsupported pipeline results in a large radius of curvature of the pipeline as it comes off the vessel, and the pipeline remains safe from bending damage. However, as the water depth increases, the length of unsupported pipeline increases, causing the pipeline to sag under its own weight. Thus, the radius of curvature of the pipeline as it leaves the vessel becomes smaller and the bending moments imposed on the pipeline may well exceed the allowable limits and result in permanent deformation of the pipeline.

For deeper water pipelaying operations, an articulated pipe discharge ramp is used to control the bending of the pipe in the overbend portion of the suspended pipeline span (GB—A—1479905). Such a pipe discharge ramp generally is a long, slender, rigid structure which extends outward and curves downward from the stern end of the pipelaying vessel, and contains rollers for supporting and paying out the pipeline as the pipelaying vessel moves forward. The pipe discharge ramp often is used in conjunction with flotation means to force the pipeline to assume a curvature whose minimum radius is large enough to avoid undue bending.

As the pipeline leaves the pipelaying vessel and acts against the articulated pipe discharge ramp, it exerts more than just a vertical component of force against the pipe discharge ramp. If the pipelaying vessel deviates slightly from its course or if lateral currents are present which act against the pipeline as it is being laid, the pipeline will attempt to move laterally off the pipe discharge ramp, but since it is held in place, it will exert a sideways or lateral force against the remote end of the pipe disharge ramp. This lateral force is translated into a sideways bending moment at the connection of the pipe discharge ramp to the pipelaying vessel. Even further, the pitching and rolling motions of the pipelaying vessel may introduce additional bending and torsional moments in the pipe discharge ramp. Such forces, acting on a substantially rigid structure, may reach such a magnitude that the pipe discharge ramp would sustain significant damage, thereby causing a cessation in the pipelaying operation and down time to repair the pipe discharge ramp or even replace it.

As pipelaying progresses into ever deeper waters, the slope of the suspended pipeline will become steeper and steeper, and therefore in very deep waters the suspended pipeline will approach the pipelaying vessel in a nearly vertical direction. Conventional S-method pipelaying in such depths will require an extremely long pipe discharge ramp which is vulnerable to rough sea conditions. A more satisfactory method of laying pipelines in very deep waters is the J-method, wherein the pipeline is assembled on the barge or ship in a vertical derrick or an adjustably inclined ramp or tower, thereby eliminating the pipe overbend associated with the S-method. (GB—A—2019976). Such a J-method requires only a relatively small vertical articulated pipe discharge ramp which controls bending of the pipe due to horizontal forces, ocean currents, and pitch and roll motions of the vessel. Such a discharge ramp will be subjected to high loads.

It is the object of the invention to provide an articulated pipe discharge ramp which not only will accommodate the operating conditions encountered during conventional pipelaying operations without being damaged, but also in less conventional pipelaying operations.

For this purpose the articulated pipe discharge ramp (1, 14) attachable to a pipelaying vessel (2, 11) for guiding a pipeline (7, 25) being laid from said vessel comprises according to the invention a plurality of elongated interconnected multi-leg segments (3, 4, 15, 16, 17) arranged in end-to-end relationship and joint means (9, 10, 21, 22, 23, 24) interconnecting at least a pair of said segments to allow said segments to flex in any direction within a preselected angle.

The invention relates moreover to a method for laying a pipeline (25) from a pipelaying vessel, which method comprises according to the invention attaching an articulated pipe discharge (14) ramp in a vertically hanging position to the pipelaying vessel (11), deploying pipeline through the articulated pipe discharge ramp, and allowing the pipe discharge ramp to flex in any direction within a preselected angle responsive to forces exerted on the deployed pipeline.

The invention will be described by way of example in more detail with reference to the drawings, wherein:

Figure 1 shows a vertical cross-section of an articulated pipe discharge ramp attached to the back end of a conventional pipelaying vessel;

Figure 2 shows a cross-section of a segment of the articulated pipe discharge ramp of Figure 1 along the line II—II, which is drawn to a scale larger than the scale of Figure 1;

Figure 3 shows a side view of a pipelaying vessel in the form of a converted deepwater drilling ship provided with an articulated pipe discharge ramp for vertical pipelaying;

Figures 4A and 4B show a joint employing a dumb-bell; and

Figures 5A and 5B show a joint employing a doubleheaded bolt with rubber dampers.

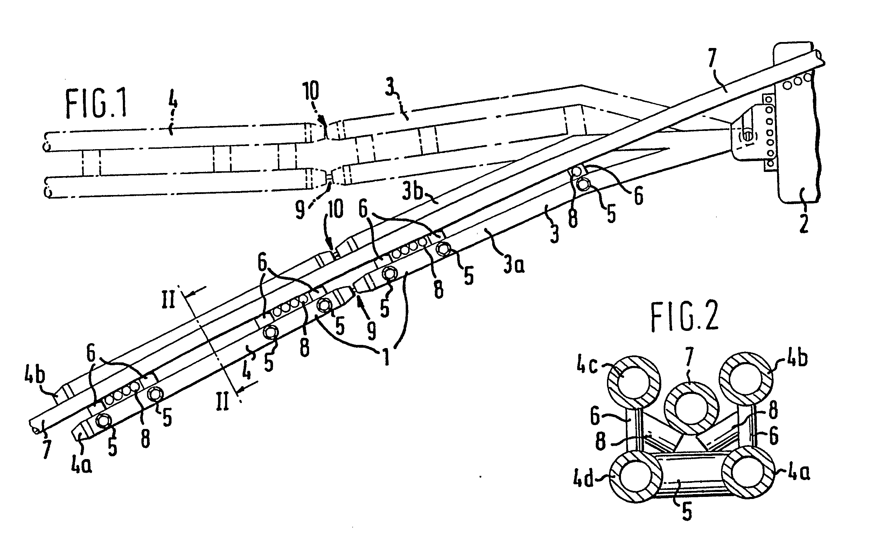

Figure 1 shows a vertical cross-section of an articulated pipe discharge ramp 1 according to the invention connected to the rear end of a pipelaying vessel 2, wherein the articulated pipe discharge ramp 1 comprises a first segment 3 and a second segment 4. The first segment 3 comprises four legs in the form of tubular sections of which only the tubular sections 3a and 3b are shown in Figure 1, the second segment 4 comprises four legs as well. The latter legs, in the form of tubular sections 4a, 4b, 4c and 4d are shown in Figure 2. The legs are interconnected by horizontal connecting members 5 and vertical connecting members 6. A pipeline 7 passes out of the rear of the pipelaying vessel 2 and is cradled by a plurality of rollers 8 arranged along the pipe discharge ramp 1. The pipe discharge ramp 1 is able to substantially flex as shown particularly at joint 9 which is closed and joint 10 which is open. When the pipe discharge ramp 1 is in a raised mode as shown in phantom, joint 9 is open and joint 10 is closed. Such flexibility improves the lifetime of the pipe discharge ramp 1 and reduces the contact loads applied to the pipeline 7 while laying a pipeline in rough seas.

The advantage of the articulated pipe discharge ramp according to the invention is that the joints allow the segments to flex in any direction within a preselected angle. Thus the joints allow more control of the vertical and lateral motions of the pipe discharge ramp than the joints of existing pipe discharge ramps, as the existing pipe discharge ramps were only provided with bumper stops to control the downward curvature of the pipe discharge ramp.

The additional control of the motions of the articulated pipe discharge ramp according to the invention is beneficial to the lifetime of the pipe discharge ramp.

In accordance with the present invention it is feasible under some circumstances to convert an existing deepwater drilling ship, semisubmersible drilling rig, or other vessel to lay pipelines. Using the existing derrick, moon pool, etc., such a vessel or rig typically may lay a pipeline in the range of from 300 m to 3000 m, where pipelaying by the above-described conventional S-method becomes increasingly difficult and expensive.

A necessary part of the conversion of an existing drilling vessel, semisubmersible drilling rig, or other vessel to pipelaying is the use of a vertical articulated pipe discharge ramp, which is attached to the bottom hull of the drilling ship or other vessel, or beneath or off the side of the semisubmersible rig for the purpose of guiding and protecting the pipeline being deployed to the ocean floor.

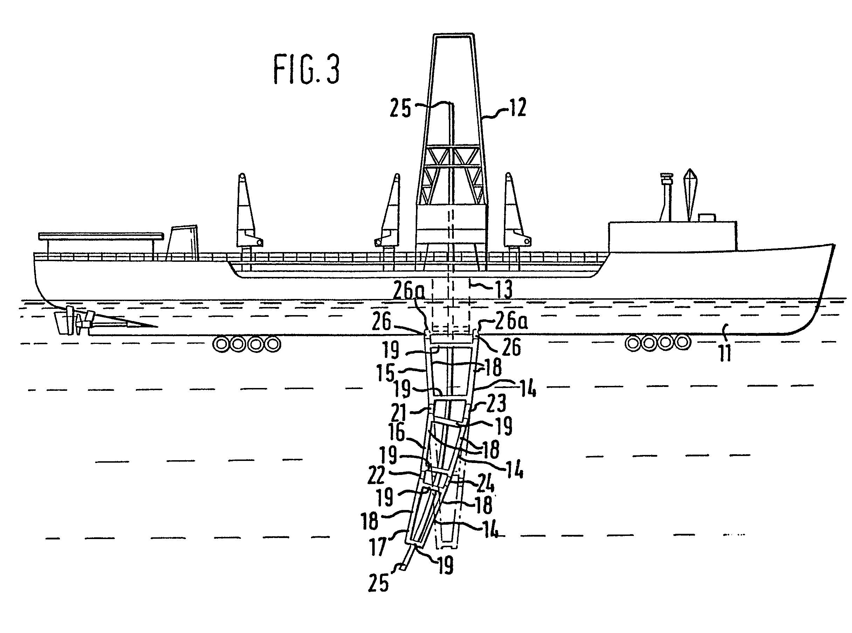

Figure 3 shows a pipelaying vessel in the form of a deepwater drilling ship 11, for carrying out the J-method of pipelaying. The drilling ship 11 is provided with a derrick 12, a moon pool 13 and a vertical articulated pipe discharge ramp 14, comprising three segments 15, 16 and 17. The segments are similar to the second segment as described with reference to Figure 1 and comprise four legs in the form of tubular sections 18. The tubular sections 18 are connected to each other by first connecting members 19 and second connecting members (not shown) which are perpendicular to the plane of drawing of Figure 3. The articulated pipe discharge ramp 14 is able to substantially flex as shown particularly at joints 21 and 22 which are closed and joints 23 and 24 which are open in the position as shown in Figure 3. When the pipe discharge ramp 14 is in a vertical position, as shown in phantom, all joints are open. Pipeline 25 is put together into a pipeline in the derrick 12 and is then passed through the moon pool 13 and the pipe discharge ramp 14.

The articulated pipe discharge ramp 14 is attached to the drilling ship 11 by docking cones 26 which mate with corresponding indentations 26a in the hull of the drilling ship 11. Connection and release of the pipe discharge ramp 14 is carried out with the use of lugs or cams (not shown) at each docking cone 26. The lugs or cams are actuated hydraulically or by wirelines, to secure the pipe discharge ramp 14 at the docking cones 26.

A significant feature of the articulated pipe discharge ramp according to the invention is that joints interconnecting a pair of segments arranged in end-to-end relationship allow these segments to flex in any direction within a preselected angle. Preferably the angles within which the segments 16 and 17 can flex, are selected in such a manner that the lower segment 17 is allowed to rotate up to 20 degrees from the vertical in order to accommodate pipeline deflections up to 20 degrees from the vertical. The pipeline may be deflected from the vertical axis by horizontal forces applied to the pipeline to control sag bend strains, ocean currents, or pitch and roll motions of the pipelaying vessel. Both the horizontal forces and the resultant current drag forces may act in directions skew to the vessel heading, so that the pipeline in general will approach the vessel obliquely to the vessel axis. Thus, the main function of the articulated pipe discharge ramp is to control the curvatures of the upper end of the pipeline span under such adverse conditions. Without an articulated pipe discharge ramp, the pipeline could fail by buckling due to excessive bending in one direction or by metal fatigue due to cyclic bending.

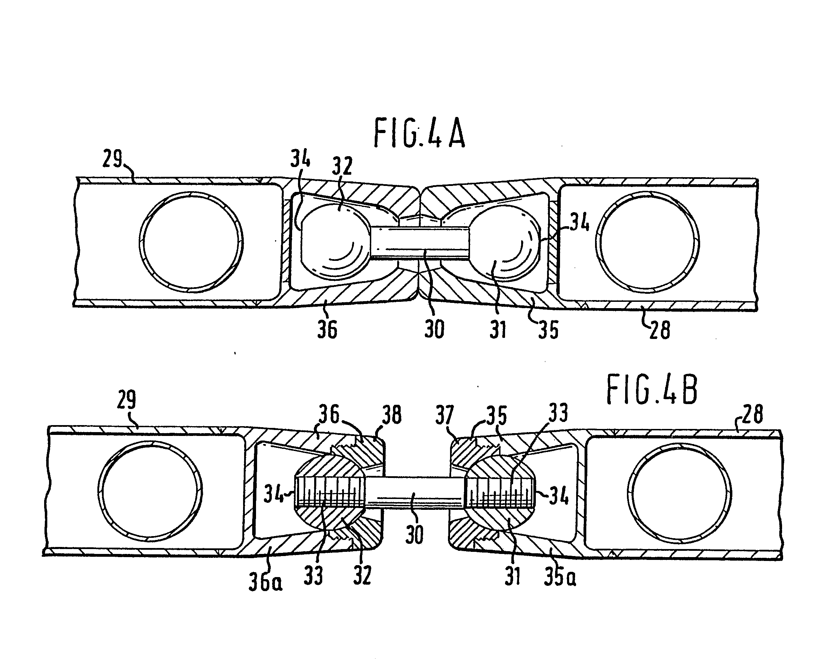

Figures 4A and 4B show a joint employing a dumb-bell. The connected socket-filling members in the form of a dumb-bell, connecting leg 28 of a first segment to leg 29 of a second segment comprises a shaft 30 and two spheres 31 and 32 at either end thereof. The spheres 31 and 32 may be attached to the shaft 30 by threads 33 or in any other manner known to the art. Preferably the spheres 31 and 32 have flattened ends 34 which allows them to abut within the outer case 35 attached to the end portion of leg 28 and the outer case 36 attached to the end portion of leg 29 without doing damage thereto. Figure 4A shows the joint in a closed position with the outer case 35 of one side abutting the outer case 36 of the other side. Figure 4B shows the joint in an opened position with the spheres 31 and 32 abutting the ends of the outer cases 35 and 36. The outer cases 35 and 36 may be manufactured in one piece, as shown in Figure 4A, or in two pieces by attaching end closures 37 and 38 to the sockets 35a and 36a of the outer cases 35 and 36, thereby enclosing the spheres 31 and 32.

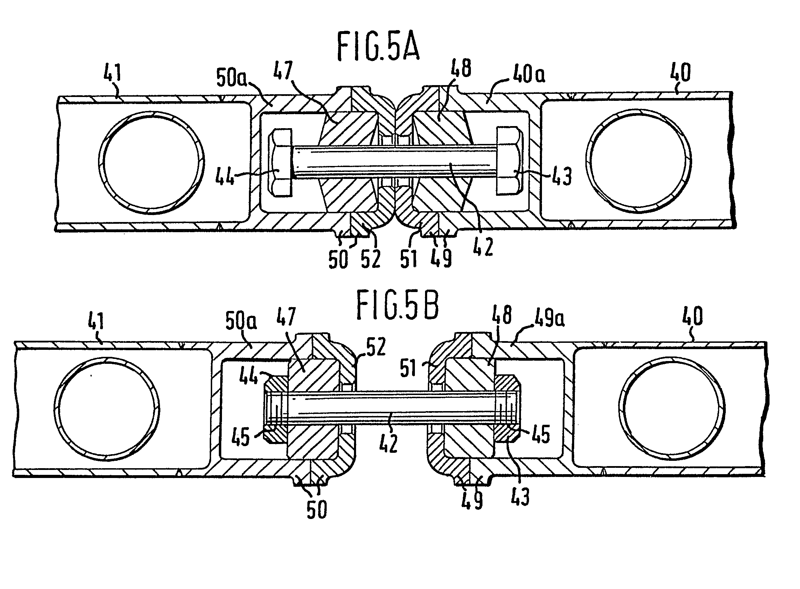

Another type of the joint is shown in Figures 5A and 5B wherein a doubleheaded bolt with rubber dampers is employed. The doubleheaded bolt, connecting leg 40 of a first segment to leg 41 of a second segment, includes a shaft 42 and heads in the form of nuts 43 and 44 attached at either end thereof by threads 45. Cushioning means in the form of rubber dampers 47 and 48 within outer cases 49 and 50 provide resilient seating for the nuts 43 and 44 within the outer cases 49 and 50. Figure 5A shows the joint in a closed position and Figure 5B shows the joint in an open position. The rubber dampers 47 and 48 are enclosed within the outer cases 49 and 50 by attaching end closures 51 and 52 to the sockets 49a and 50a.

The advantage of the above-described joints is the strength thereof, which is beneficial for the life of the articulated pipe discharge ramp.

If the segments of the articulated pipe discharge ramp have more than two longitudinal legs, for example three or four, there will be three or four joints used between each pair of segments.

Claims

1. An articulated pipe discharge ramp attachable to a pipelaying vessel for guiding a pipeline being laid from said vessel, said pipe discharge ramp comprising a plurality of elongated interconnected multi-leg segments arranged in end-to-end relationship and joint means interconnecting at least a pair of said segments characterized in that the joint means allow the said segments to flex in any direction within a preselected angle.

2. The articulated pipe discharge ramp as claimed in claim 1 characterized in that said joint means include at least two sockets, with each socket being in an abutting end of said pair of segments, and two connected socket-filling members.

3. The articulated pipe discharge ramp as claimed in claim 2 characterized in that said connected socket-filling members are in the form of a dumb-bell.

4. The articulated pipe discharge ramp as claimed in claim 3 characterized in that the furthermost ends of the dumb-bell are flattened.

5. The articulated pipe discharge ramp as claimed in claim 2 characterized in that said connected socket-filling members are in the form of a doubleheaded bolt.

6. The articulated pipe discharge ramp as claimed in claim 5 characterized in that cushioning means are provided between the bolt heads and the sockets.

7. The articulated pipe discharge ramp as claimed in claim 1 characterized in that the articulated pipe discharge ramp is attachable to the pipelaying vessel in a vertically hanging position.

8. The articulated pipe discharge ramp as claimed in claim 7 characterized in that the pipelaying vessel is a drilling ship having a moon pool, and the articulated pipe discharge ramp is disposed beneath the moon pool.

9. The articulated pipe discharge ramp as claimed in claim 8 characterized in that the pipelaying vessel hull has conical indentations which mate with docking cones at the upper ends of the articulated pipe discharge ramp.

10. The articulated pipe discharge ramp as claimed in claim 9 characterized in that wirelines extend from the vessel to the articulated pipe discharge ramp via holes in the docking cones, and means is provided to connect and release the articulated pipe discharge ramp with the wirelines.

11. The articulated pipe discharge ramp as claimed in claim 7, characterized in that the preselected angle is selected in such a manner that the lower segment can rotate up to 20 degrees from the vertical.

12. A method for laying a pipeline from a pipelaying vessel characterized in that the method comprises attaching an articulated pipe discharge ramp in a vertically hanging position to the pipelaying vessel, deploying pipeline through the articulated pipe discharge ramp, and allowing the articulated pipe discharge ramp to flex in any direction within a preselected angle responsive to forces exerted on the deployed pipeline.

13. The method as claimed in claim 12 characterized in that the pipelaying vessel is a drilling ship having a moon pool, and the articulated pipe discharge ramp is disposed beneath the moon pool.

14. The method as claimed in claim 13 characterized in that the pipelaying vessel hull has conical indentations, the articulated pipe discharge ramp has upper ends which have docking cones, and the articulated pipe discharge ramp is attached to the pipelaying vessel by mating the docking cones with the conical indentations.

15. The method as claimed in claim 14 characterized in that wirelines extend from the vessel to the articulated pipe discharge ramp via holes in the docking cones, and the articulated pipe discharge ramp is released from and connected to the pipelaying vessel by the wire lines.

16. The method as claimed in claim 12 characterized in that the preselected angle is selected in such a manner that the lower segment can rotate up to 20 degrees from the vertical.

## Patentansprüche

1. Mit einem Rohrlegeschiff verbindbare gelenkige Rohr-Ablauframpe zum Führen einer vom Schiff aus ausgelegten Rohrleitung, mit mehreren langgestreckten, miteinander verbundenen, endweise angeordneten mehrteiligen Segmenten und Kupplungen, mit denen wenigstens ein Paar dieser Segmente miteinander verbunden ist, dadurch gekennzeichnet, daß die Kupplungen ein Nachgeben dieser Segmente in beliebiger Richtung innerhalb eines vorgewählten Winkels ermöglichen.

2. Gelenkige Rohr-Ablauframpe nach Anspruch 1, dadurch gekennzeichnet, daß diese Kupplungen wenigstens zwei Pfannen, von denen jede in einem der aneinandergestoßenen Enden dieses Segmentpaares ausgebildet ist, und zwei miteinander verbundene, die Pfannen füllende Bauteile aufweisen.

3. Gelenkige Rohr-Ablauframpe nach Anspruch 2, dadurch gekennzeichnet, daß diese miteinander verbundenen, die Pfannen füllenden Bauteile die Gestalt einer Hantel haben.

4. Gelenkige Rohr-Ablauframpe nach Anspruch 3, dadurch gekennzeichnet, daß die äußersten Enden der Hantel abgeflacht sind.

5. Gelenkige Rohr-Ablauframpe nach Anspruch 2, dadurch gekennzeichnet, daß diese miteinander verbundenen, die Pfannen füllenden Bauteile die Gestalt eines Doppelkopfbolzens haben.

6. Gelenkige Rohr-Ablauframpe nach Anspruch 5, dadurch gekennzeichnet, daß zwischen den Bolzenköpfen und den Pfannen Dämpfer angeordnet sind.

7. Gelenkige Rohr-Ablauframpe nach Anspruch 1, dadurch gekennzeichnet, daß sie mit dem Rohrlegeschiff in vertikaler Hängeposition verbindbar ist.

8. Gelenkige Rohr-Ablauframpe nach Anspruch 7, dadurch gekennzeichnet, daß das Rohrlegeschiff ein Bohrschiff mit einer Öffnung zur Ölaufnahme im Schiffsboden ist, und die gelenkige Rohr-Ablauframpe unter dieser Öffnung angeordnet ist.

9. Gelenkige Rohr-Ablauframpe nach Anspruch 8, dadurch gekennzeichnet, daß der Rumpf des Rohrlegeschiffes konische Vertiefungen aufweist, die mit Kupplungskegeln an den oberen Enden der gelenkigen Rohr-Ablauframpe zusammenpassen.

10. Gelenkige Rohr-Ablauframpe nach Anspruch 9, dadurch gekennzeichnet, daß sich vom Schiff zur gelenkigen Rohr-Ablauframpe über Löcher in den Kupplungskegeln Drahtseile erstrecken, und daß Vorrichtungen zum Verbinden und Lösen der gelenkigen Rohr-Ablauframpe mit bzw. von den Drahtseilen vorgesehen sind.

11. Gelenkige Rohr-Ablauframpe nach Anspruch 7, dadurch gekennzeichnet, daß der vorgewählt Winkel so gewählt ist, daß das untere Segment bis zu 20 Grad von der Senkrechten weg schwenkbar ist.

12. Verfahren zum Auslegen einer Rohrleitung von einem Rohrlegeschiff aus, dadurch gekennzeichnet, daß mit dem Rohrlegeschiff eine gelenkige Rohr-Ablauframpe in vertikaler Hängeposition verbunden wird, eine Rohrleitung mittels der gelenkigen Rohr-Ablauframpe über Bord gegeben wird, und es der gelenkigen Rohr-Ablauframpe gestattet wird, in Abhängigkeit von auf die über Bord gegebene Rohrleitung ausgeübten Kräften in beliebiger Richtung innerhalb eines vorgewählten Winkels nachzugeben.

13. Verfahren nach Anspruch 12, dadurch gekennzeichnet, daß das Rohrlegeschiff ein Bohrschiff mit einer Öffnung zur Ölaufnahme im Schiffsboden ist, und die gelenkige Rohr-Ablauframpe unter dieser Öffnung angeordnet ist.

14. Verfahren nach Anspruch 13, dadurch gekennzeichnet, daß der Rumpf des Rohrlegeschiffes konische Vertiefungen aufweist, die gelenkige Rohr-Ablauframpe an oberen Enden mit Kupplungskegeln versehen ist, und die gelenkige Rohr-Ablauframpe mit dem Rohrlegeschiff durch Paaren der Kupplungskegel mit den konischen Vertiefungen verbunden wird.

15. Verfahren nach Anspruch 14, dadurch gekennzeichnet, daß sich vom Schiff zur gelenkigen Rohr-Ablauframpe über Löcher in den Kupplungskegeln Drahtseile erstrecken, und die gelenkige Rohr-Ablauframpe durch die Drahtseile vom Rohrlegeschiff gelöst und mit ihm verbunden wird.

16. Verfahren nach Anspruch 12, dadurch gekennzeichnet, daß der vorgewählte Winkel so gewählt wird, daß das untere Segment bis zu 20 Grad von der Senkrechten weg schwenkbar ist.

## Revendications

1. Une rampe articulée de déchargement de pipeline pouvant être fixée sur un navire de pose de pipe-line pour guider un pipe-line en train d'être déposé à partir dudit navire, ladite rampe de déchargement comprenant une pluralité de segments allongés à branches multiples, reliés entre eux en étant placés bout à bout, et des moyens de jonction assurant la liaison d'au moins deux desdits segments, caractérisée en ce que les moyens de jonction permettent auxdits segments de s'infléchir dans n'importe quelle direction à l'intérieur d'un angle présélectionné.

2. La rampe articulée de déchargement de pipe-line telle que revendiquée dans la revendication 1, caractérisée en ce que ledit moyen de jonction comprend au moins deux douilles, chaque douille venant buter en bout contre les segments de ladite paire, et deux éléments accouplés de remplissage de douilles.

3. La rampe articulée de déchargement de pipe-line telle que revendiquée dans la revendication 2, caractérisée en ce que lesdits éléments accouplés de remplissage de douilles sont en forme d'haltère.

4. La rampe articulée de déchargement de pipe-line telle que revendiquée dans la revendication 3, caractérisée en ce que les extrémités les plus éloignées de l'haltère sont aplaties.

5. La rampe articulée de déchargement de pipe-line telle que revendiquée dans la revendication 2, caractérisée en ce que lesdits éléments accouplés de remplissage de douilles ont la forme d'un boulon à double tête.

6. La rampe articulée de déchargement de pipe-line telle que revendiquée dans le revendication 5, caractérisée en ce que des moyens d'amortissement sont placés entre les têtes de boulon et les douilles.

7. La rampe articulée de déchargement de pipe-line telle que revendiquée dans la revendication 1, caractérisé en ce que la rampe articulée de décharge de pipe-line peut être fixée sur le navire de pose de pipe-line dans une position verticalement suspendue.

8. La rampe articulée de déchargement de pipe-line telle que revendiquée dans la revendication 7, caractérisée en ce que le navire de pose de pipe-line est un bateau de forage comportant une ouverture de traversée et la rampe articulée de déchargement de pipe-line est disposée en dessous de l'ouverture de traversée.

9. La rampe articulée de déchargement de pipe-line telle que revendiquée dans la revendication 8, caractérisée en ce que la coque du navire de pose de pipe-line comporte des creux de forme conique qui reçoivent des cônes d'ancrage prévus aux extrémités supérieures de la rampe articulée de déchargement de pipe-line.

10. La rampe articulée de déchargement de pipe-line telle que revendiquée dans la revendication 9, caractérisée en ce que les câbles s'étendent du navire jusqu'à la rampe articulée de déchargement de pipe-line par l'intermédiaire de trous ménagés dans les cônes d'ancrage et il est prévu un moyen pour accouplet et désaccoupler la rampe articulée de déchargement de pipe-line par rapport aux câbles.

11. La rampe articulée de déchargement de pipe-line telle que revendiquée dans la revendication 7, caractérisée en ce que 'angle présélectionné est choisi d'une manière telle que le segment inférieur puisse tourner jusqu'à 20 degrés par rapport à la verticale.

12. Un procédé pour poser un pipe-line à partir d'un navire de pose de pipe-line, caractérisé en ce que dans le procédé on fixe une rampe articulée de déchargement de pipe-line dans une position verticalement suspendue au navire de pose de pipe-line, on déploie un pipe-line au travers de la rampe articulée de déchargement et on permet à la rampe articulée de déchargement de s'infléchir dans n'importe quelle direction à l'intérieur d'un angle présélectionné en réponse à des forces exercées sur le pipe-line déployé.

13. Le procédé tel que revendiqué dans la revendication 12, caractérisé en ce que le navire de pose de pipe-line est un bateau de forage comportant une ouverture de traversée et la rampe articulée de déchargement de pipe-line est disposée en dessous de l'ouverture de traversée.

14. Le procédé tel que revendiqué dans la revendication 13, caractérisé en ce que la coque du navire de pose de pipe-line comporte des creux de profil conique, la rampe articulée de déchargement de pipe-line comporte des extrémités supérieures qui sont pourvues de cônes d'ancrage et la rampe articulée de déchargement de pipe-line est fixée sur le navire de pose de pipe-line par adaptation des cônes d'ancrage dans les creux de profil conique.

15. Le procédé tel que revendiqué dans la revendication 14, caractérisé en ce que les câbles s'étendent du navire jusqu'à la rampe articulée de déchargement de pipe-line par l'intermédiaire de trous ménagés dans les cônes d'ancrage et la rampe articulée de déchargement de pipe-line est désaccouplée de et accouplée au navire de pose de pipe-line par les câbles.

16. Le procédé tel que revendiqué dans la revendication 12, caractérisé en ce que l'angle présélectionné est choisi d'une manière telle que le segment inférieur puisse tourner jusqu'à 20 degrés par rapport à la verticale.

FIG.1

FIG.2

FIG.3

FIG.4A

FIG.4B

FIG.5A

FIG.5B